# EUROPÄISCHE PATENTANMELDUNG

(11) **EP 2 830 172 A2**
(43) Veröffentlichungstag der Anmeldung: **28.01.2015**
(21) Anmeldenummer: 14178069.2
(22) Anmeldetag: 22.07.2014
(51) Int. Cl.: H02G 1/06

(54) **Kabelumlenkbogen**

(30) Priorität: 26.07.2013 CH 13162013
(71) Anmelder: Singerer Müller, Maria, 8259 Kaltenbach (CH)
(72) Erfinder: Singerer Müller, Maria, 8259 Kaltenbach (CH)
(74) Vertreter: Dr. Graf & Partner AG

(57) **Zusammenfassung**

Der Kabelumlenkbogen (1) umfasst eine Haltevorrichtung (2) sowie eine Mehrzahl von Rollen (3) mit je einer Drehachse (3a), wobei die Rollen (3) mit gegenseitig parallel verlaufenden Drehachsen (3a) in der Haltevorrichtung (2) angeordnet sind, wobei die Haltevorrichtung (2) ein Krümmungszentrum (Z) und eine dadurch definierte Umfangsrichtung (U) aufweist, und wobei die Rollen (3) in Umfangsrichtung (U) gegenseitig beabstandet und über einen Umfangswinkelbereich (α) von 140 Grad bis 220 Grad verteilt angeordnet sind, wobei die Haltevorrichtung (2) eine Verstellvorrichtung (4) umfasst, welche derart angeordnet und ausgestaltet ist, dass der Abstand (A) zumindest der ersten und/oder der letzten in Umfangsrichtung (U) angeordneten Rolle (3b) bezüglich dem Zentrum (Z) verstellbar ist.

## Beschreibung

Die Erfindung betrifft einen Kabelumlenkbogen.

### Stand der Technik

Alle Arten von Kabeln zur Durchleitung von Energie oder Daten müssen oberirdisch im Freileitungsbau oder auch unterirdisch in Schächten oder Rohren verlegt werden. Hierfür werden unter anderem sogenannte Kabelrollen, Kabelbögen und ähnliches Hilfsmaterial verwendet, über das die Kabel geführt werden.

Bekannte Hilfsmittel weisen den Nachteil auf, dass sich das Verlegen, Einblasen oder Ziehen eines Kabels baustellensituationsbedingt als sehr schwierig oder gar nicht realisierbar erweisen kann, da gewisse Verlege- oder Zugradien nicht zulässig sind.

### Darstellung der Erfindung

Aufgabe der Erfindung ist es einen vorteilhafteren Kabelumlenkbogen auszubilden.

Diese Aufgabe wird gelöst mit einem Kabelumlenkbogen aufweisend die Merkmale von Anspruch 1. Die Unteransprüche 2 bis 11 betreffen weitere, vorteilhafte Ausgestaltungen.

Die Aufgabe wird insbesondere gelöst mit einem Kabelumlenkbogen umfassend eine Haltevorrichtung sowie eine Mehrzahl von Rollen mit je einer Drehachse, wobei die Rollen mit gegenseitig parallel verlaufenden Drehachsen in der Haltevorrichtung angeordnet sind, wobei die Haltevorrichtung ein Krümmungszentrum und eine dadurch definierte Umfangsrichtung aufweist, und wobei die Rollen in Umfangsrichtung gegenseitig beabstandet und über einen Umfangswinkelbereich von 140 Grad bis 220 Grad verteilt angeordnet sind, wobei die Haltevorrichtung eine Verstellvorrichtung umfasst, welche derart angeordnet und ausgestaltet ist, dass der Abstand zumindest der erste und/oder der letzten in Umfangsrichtung angeordneten Rolle bezüglich dem Zentrum verstellbar ist.

Der erfindungsgemässe Kabelumlenkbogen weist den Vorteil auf, dass dieser entlang eines relativ langen Umfangswinkelbereichs gegenseitig beabstandet angeordnete Rollen aufweist, sodass die Kabel besonders schonend auch um grössere Winkel geführt werden können. Besonders vorteilhaft ist, dass die Position der ersten und/oder letzten in Umfangsrichtung angeordneten Rolle bezüglich des Zentrums verstellt werden kann. Dadurch kann die durch den Kabelumlenkbogen vorbestimmte Kabelführung individuell optimiert werden, insbesondere um die an Anfang und/oder am Schluss des Kabelumlenkbogens auf das Kabel bewirkten Kräfte sowie Verlege-oder Zugwinkel des Kabels zu beeinflussen. Ein Kabel kann unter unterschiedlichen Winkeln dem Kabelumlenkbogen zugeführt werden oder von diesem abgezogen werden, wobei diese Winkel üblicherweise durch die vorliegende Situation, beispielsweise die Anordnung in einem Schacht, den Verlauf eines Kabelkanals und/oder die Position einer Zugmaschine, mit welcher das Kabel ein- oder ausgezogen wird, bestimmt werden. In der Praxis ergibt sich beispielsweise oft das Problem, dass die Zugmaschine, nicht optimal für einen zulässigen Zugwinkel des Kabels platziert werden kann. Wenn nun beispielsweise ein Kabel mit Hilfe einer derartige Zugmaschine aus einem Kabelkanal gezogen wird, so ist der erfindungsgemässe Kabelumlenkbogen derart anzuordnen, dass das zu ziehende oder zu lenkende Kabel keine übermässige Umlenkung erfährt, und somit keine übermässigen Zug- oder Scherkräfte durch einen zu geringen Umlenkradius auf das Kabel einwirken. Da die Position des Kabelkanals üblicherweise fest vorgegeben ist, und die Position der Zugmaschine oft nur in engen Grenzen variierbar ist, ist die Anordnung und Ausgestaltung des Kabelumlenkbogens von besonderer Bedeutung, weil in einer solchen Situation im Wesentlichen nur die durch den Kabelumlenkbogen bewirkte Führung des Kabels gewährleistet dass am Kabel nicht übermässige Zug- und Scherkräfte auftreten. Der erfindungsgemässe Kabelumlenkbogen weist den Vorteil auf, dass dieser auf unterschiedlichste Weise und in unterschiedlichsten Anordnungen und Ausrichtungen montiert werden kann, um beispielsweise die durch das Umlenken zwischen Kabelkanal und Zugmaschine verursachten Kräfte und Radien auszugleichen. Der erfindungsgemässe Kabelumlenkbogen weist nun die Möglichkeit auf, die Position der ersten und/oder letzten in Umfangsrichtung angeordneten Rolle bezüglich des Zentrums zu verstellen, sodass einerseits die auf das Kabel wirkenden Kräfte als auch der Verlege-oder Zugradius des Kabels durch ein Verstellen der Rolle zusätzlich beeinflusst werden können.

In einer besonders vorteilhaften Ausgestaltung umfasst der Kabelumlenkbogen zwei Seitenwände, zwischen welchen die Rollen angeordnet sind. Die Seitenwände münden vorteilhafterweise in ein sich in Umfangsrichtung erstreckendes Rohr, sodass der Kabelumlenkbogen besonders gut und angenehm an diesem Rohr gehalten werden kann. Die beiden Seitenwände weisen vorteilhafterweise gegenseitig deckungsgleich angeordnete Öffnungen auf, durch die zum Fixieren des Kabelumlenkbogens, zum Beispiel in einem Kabelschacht, ein Befestigungsmittel wie eine Stange gesteckt werden kann. Diese Stangen werden zusammen mit dem Kabelumlenkbogen zwischen die Schachtwände gespreizt. Der erfindungsgemässe Kabelumlenkbogen weist somit den Vorteil auf, dass dieser auf einfache Weise und insbesondere bei engen Platzverhältnissen schnell und unkompliziert befestigt und auch wieder entfernt werden kann.

Der erfindungsgemässe Kabelumlenkbogen wird nachfolgend an Hand von Ausführungsbeispielen beschrieben.

### Kurze Beschreibung der Zeichnungen

Die zur Erläuterung der Ausführungsbeispiele verwendeten Zeichnungen zeigen:
Fig. 1 eine perspektivische Seitenansicht eines Kabelbogens;
Fig. 2 eine perspektivische Aufsicht des Kabelbogens;
Fig. 3 eine Verstellvorrichtung des Kabelbogens im Detail;
Fig. 4 schematisch eine Befestigungsmöglichkeit eines Kabelbogens.

Grundsätzlich sind in den Zeichnungen gleiche Teile mit gleichen Bezugszeichen versehen.

### Wege zur Ausführung der Erfindung

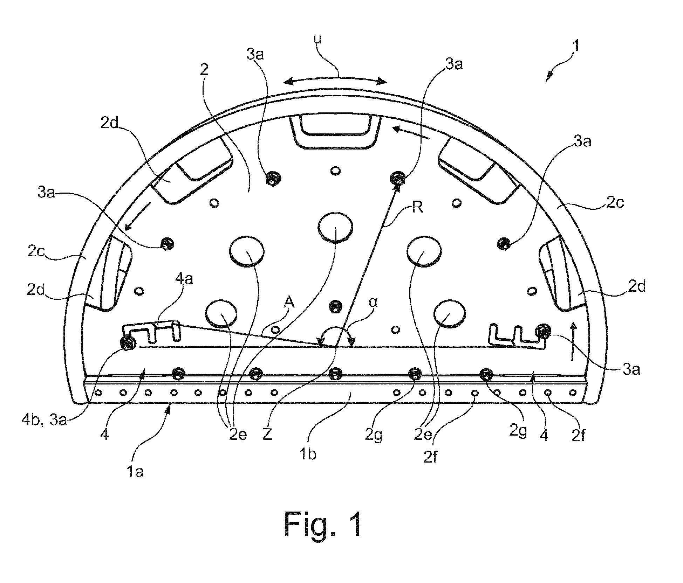

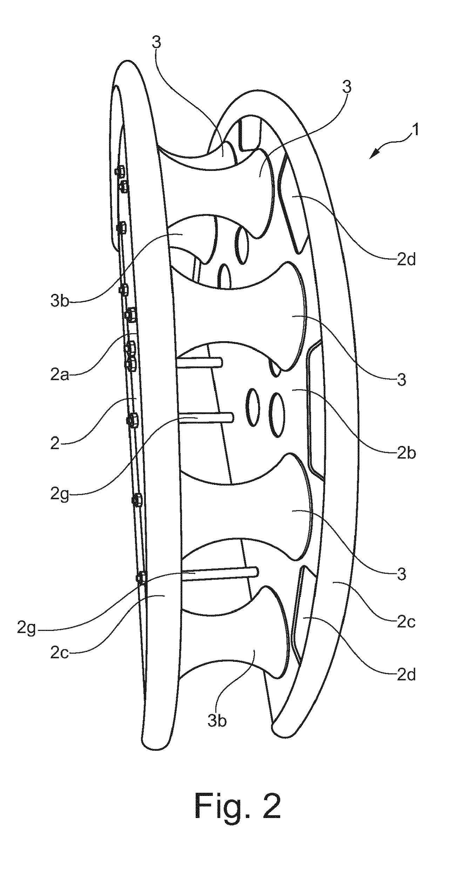

Die Figuren 1 und 2 zeigen einen Kabelumlenkbogen 1 zum Verlegen von Kabeln. Der Kabelumlenkbogen 1 umfasst eine Haltevorrichtung 2 sowie eine Mehrzahl von Rollen 3 mit Drehachsen 3a, wobei die Rollen 3 mit gegenseitig parallel verlaufenden Drehachsen 3a in der Haltevorrichtung 2 angeordnet sind. Die Haltevorrichtung 2 weist ein Krümmungszentrum Z auf und eine dadurch definierte Umfangsrichtung U. Die Rollen 3 sind in Umfangsrichtung U gegenseitig beabstandet angeordnet und über einen Umfangswinkelbereich α von 140 Grad bis 220 Grad verteilt angeordnet. Die Rollen 3 definieren somit einen Krümmungsverlauf entlang welchem ein Kabel gezogen und dadurch umgelenkt wird. Der Krümmungsverlauf garantiert, dass das Kabel während der Umlenkung keine allzu starke, das Kabel allenfalls beschädigende Krümmung erfährt. Die Rollen 3 bestehen vorzugsweis aus einem Kunststoff wie Polyamid, aus Stahlblech, Stahlguss oder Aluminiumguss

Die Haltevorrichtung 2 umfasst eine Verstellvorrichtung 4, welche derart angeordnet und ausgestaltet ist, dass der Abstand A zumindest der ersten und/oder der letzten in Umfangsrichtung U angeordneten Rolle 3b bezüglich des Zentrum Z verstellbar ist. Dadurch kann insbesondere die im Bereich des Eintritts oder des Austritts des Kabelumlenkbogens auf das Kabel bewirkte Zug- und/oder Scherkraft und der Zugwinkel beeinflusst werden und den jeweils während eines Kabeleinzugs vorliegenden Umständen und geometrischen Gegebenheiten angepasst werden.

In einer möglichen Ausgestaltung sind alle Rollen 3 über eine Verstellvorrichtung 4 mit der Haltevorrichtung 2 verbunden. Vorzugsweise sind jedoch nur die erste und/oder letzte der in Umfangsrichtung U angeordneten Rollen 3b über eine Verstellvorrichtung 4 mit der Haltevorrichtung 2 verbunden, wobei die übrigen Rollen 3 bezüglich dem Zentrum Z fest angeordnet sind und bezüglich dem Zentrum Z vorzugsweise denselben Radiusabstand R aufweisen.

In einer weiteren vorteilhaften Ausgestaltung sind die Rollen 3 über einen Umfangswinkelbereich α von 180 Grad oder in etwa 180 Grad angeordnet, sodass diese eine Umlenkung um einen Halbkreis bilden. Der Kabelumlenkbogen 1 weist vorzugsweise eine Verstärkung 1b mit Öffnungen 2f für eine Befestigungsvorrichtung auf, wobei die Verstärkung 1b eine Auflage 1a ausbildet, welche vorteilhafterweise wie in Figur 1 dargestellt geradlinig verlaufend ausgestaltet ist, insbesondere dann, wenn Umfangswinkelbereich α 180 Grad oder etwa 180 Grad beträgt. Sollte der Umfangswinkel α kleiner gewählt sein, und beispielsweise nur 140 Grad betragen, so könnte diese Verstärkung 1b beispielsweise auch aus zwei Teilen bestehen, welche sich unter einem Knick mit Winkel α treffen. Das Verstärkungsteil 1b ist vorteilhafterweise fest mit dem Aussenrohr 2c verbunden, um zusammen mit dem Aussenrohr 2c einen stabilen Rahmen zu bilden, der somit den angreifenden Kräften Stand hält

In einer besonders vorteilhaften Ausgestaltung umfasst die Haltevorrichtung 2, wie in den Figuren 1 und 2 dargestellt, zwei Seitenwände 2a,2b, zwischen welchen die Rollen 3 angeordnet sind. Vorteilhafterweise umfasst der Kabelumlenkbogen 1 zudem Abstandhalter 2g, um die Seitenwände 2a,2b einerseits in einem definierten gegenseitigen Abstand zu halten und andererseits zu stabilisieren. Vorteilhafterweise mündet jede Seitenwand 2a,2b in ein konzentrisch zum Zentrum Z verlaufendes, sich in Umfangsrichtung U erstreckendes Rohr 2c. Vorteilhafterweise sind die zwei Seitenwände 2a,2b in Umfangsrichtung U abschnittweise nicht mit dem Rohr 2c verbunden, sodass zwischen der Seitenwand 2a,2b und dem Rohr 2c eine Ausnehmung 2d ausgebildet ist. Die Ausnehmungen 2d und das Rohr 2c ermöglichen, dass der Kabelumlenkbogen 1 gut gehandhabt bzw. gehalten und/oder positioniert werden kann.

Der in den Figuren 1 und 2 dargestellte Kabelumlenkbogen 1 könnte, bei ansonsten gleicher Ausgestaltung, jedoch auch nur eine einzige Seitenwand 2a und beispielsweise ersatzweise für 2b eine Stahlrohr-Rahmenkonstruktion oder beispielweise ersatzweise für 2a und 2b je eine Stahlrohr-Rahmenkonstruktion aufweisen, an welcher die Rollen 3 befestigt sind.

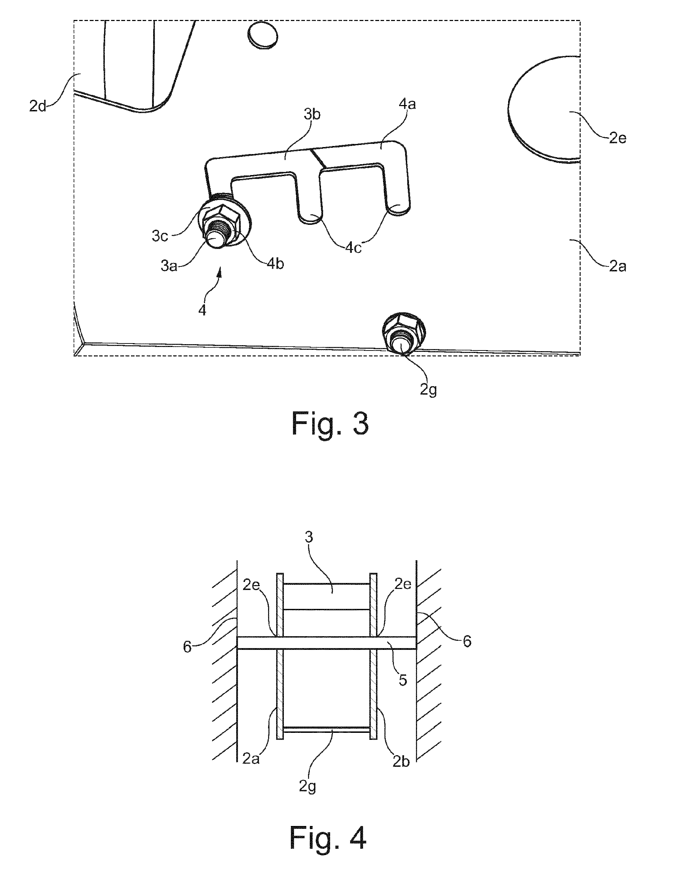

In einer vorteilhaften Ausgestaltung umfasst jede Seitenwand 2a,2b zumindest eine Öffnung 2e, welche gegenseitig deckungsgleich angeordnet ist, und welche vorzugsweise im Bereich zwischen dem Zentrum Z und der Rollen 3 angeordnet ist. Vorzugsweise weist jede Seitenwand 2a,2b wie in Figur 1 und 2 dargestellt, eine Mehrzahl von Öffnungen 2e auf. Diese Öffnungen 2e sind besonders vorteilhaft um den Kabelumlenkbogen 1 zu befestigen. Figur 4 zeigt schematisch eine mögliche Befestigung des Kabelumlenkbogens 1 mit Hilfe einer Metallachse 5 zwischen zwei Wänden 6, wobei die Metallachse 5 nur schematisch dargestellt ist und deshalb beispielsweise allfällig erforderliche Befestigungsmittel nicht dargestellt sind. Eine Metallstange 5 wird durch die Öffnungen 2e des Kabelumlenkbogens 1 geführt. Danach wird die Metallstange 5 zwischen den Wänden 6 verkeilt, sodass der Kabelumlenkbogen 1 fest zwischen den Wänden 6 fixiert ist. Der erfindungsgemässe Kabelumlenkbogen 1 kann somit auf einfache Weise und auch in schwierigen und engen Umgebungen befestigt und wieder entfernt werden. Je nach Situation kann der Kabelumlenkbogen 1 auch mit mehreren Metallstangen 5 fixiert werden.

Figur 3 zeigt die in Figur 1 dargestellte Verstellvorrichtung 4 zur unterschiedlichen Positionierung der ersten und letzten Rolle 3b im Detail. Die beiden gegenüberliegend angeordneten Seitenwände 2a,2b weisen beide identisch verlaufende Ausnehmung4a auf. Die Achse 3a der Rolle 3b verläuft durch die Ausnehmung 4a. Eine Mutter 4b mit Unterlagscheibe 3c dient dazu die Rollenachse 3a fest mit der Ausnehmung 4abeziehungsweise der Seitenwand 2a zu verbinden. Im dargestellten Ausführungsbeispiel ist die Ausnehmung 4a E-förmig ausgestaltet. Die Rollenachse 3a kann bei gelöster Mutter 4b frei innerhalb der Ausnehmung 4a verschoben werden und an einer geeigneten Stellte über die Mutter 4b und die Unterlagscheibe 3c fest mit der Seitenwand 2a,2b verbunden werden. Die Ausnehmung 4a kann eine Vielzahl möglicher Formen aufweisen, und könnte beispielsweise auch U-förmig ausgestaltet sein. In einer besonders vorteilhaften Ausgestaltung weist die Ausnehmung 4a vorbestimmte Befestigungsstellen 4c auf, welche eine genaue Lage definieren und welche zur Befestigung der Rollenachse 3a daher besonders gut geeignet sind.

Wie aus Figur 1 ersichtlich weist der Kabelumlenkbogen 1 in einer vorteilhaften Ausgestaltung ein geradlinig verlaufendes Verstärkungsteil 1b auf, das auch als Auflagefläche 1a dienen kann, in welche die beiden Seitenwände 2a, 2b münden.. In einer vorteilhaften Ausgestaltung umfasst das Verstärkungsteil 1 b eine Mehrzahl von ebenfalls durch die Seitenwände 2a und 2b verlaufenden Bohrungen 2f, um den Kabelumlenkbogen 1 mit Hilfe von Befestigungsmitteln beispielsweise wie einem Winkeleisen anstelle von oder zusätzlich zu einer Metallachse 5 an einer Wand zu befestigen. Das Winkeleisen wird somit am Verstärkungsteil 1b und zum Beispiel an einer Innenwand eines Schachtes befestigt.

## Patentansprüche

1. Kabelumlenkbogen (1) zur Kabelverlegung, umfassend eine Haltevorrichtung (2) sowie eine Mehrzahl von Rollen (3) mit je einer Drehachse (3a), wobei die Rollen (3) mit gegenseitig parallel verlaufenden Drehachsen (3a) in der Haltevorrichtung (2) angeordnet sind, wobei die Haltevorrichtung (2) ein Krümmungszentrum (Z) und eine dadurch definierte Umfangsrichtung (U) aufweist, und wobei die Rollen (3) in Umfangsrichtung (U) gegenseitig beabstandet und über einen Umfangswinkelbereich (α) von 140 Grad bis 220 Grad verteilt angeordnet sind, wobei die Haltevorrichtung (2) eine Verstellvorrichtung (4) umfasst, welche derart angeordnet und ausgestaltet ist, dass der Abstand (A) zumindest der ersten und/oder der letzten in Umfangsrichtung (U) angeordneten Rolle (3b) bezüglich des Zentrums (Z) verstellbar ist.

2. Kabelumlenkbogen nach Anspruch 1, **dadurch gekennzeichnet, dass**, mit Ausnahme der ersten und/oder der letzten in Umfangsrichtung (U) angeordneten Rolle (3b) die restlichen Rollen (3) bezüglich dem Zentrum (Z) fest angeordnet sind und denselben Radiusabstand (R) aufweisen.

3. Kabelumlenkbogen nach Anspruch 1 oder 2, **dadurch gekennzeichnet, dass** die Rollen (3) über einen Umfangswinkelbereich (α) von 180 Grad oder in etwa 180 Grad angeordnet sind.

4. Kabelumlenkbogen nach einem der vorhergehenden Ansprüche, **dadurch gekennzeichnet, dass** die Haltevorrichtung (2) zwei Seitenwände (2a,2b) umfasst, zwischen welchen die Rollen (3) angeordnet sind.

5. Kabelumlenkbogen nach Anspruch 4, **dadurch gekennzeichnet, dass** jede Seitenwand (2a,2b) in ein konzentrisch zum Zentrum (Z) verlaufendes, sich in Umfangsrichtung (U) erstreckendes Rohr (2c) mündet.

6. Kabelumlenkbogen nach Ansprüche 4 oder 5, **dadurch gekennzeichnet, dass** jede Seitenwand (2a,2b) zumindest eine Öffnung (2e) aufweist, wobei die Öffnungen (2e) gegenseitig deckungsgleich angeordnet sind, und wobei die Öffnungen (2e) in jeder Seitenwand (2a,2b) zwischen dem Zentrum (Z) und der Rolle (3) angeordnet sind.

7. Kabelumlenkbogen nach einem der Ansprüche 4 bis 6, **dadurch gekennzeichnet, dass** die zwei Seitenwände (2a,2b) in Umfangsrichtung (U) abschnittweise nicht mit dem Rohr (2c) verbunden ist, sodass zwischen der Seitenwand (2a,2b) und dem Rohr (2c) eine Ausnehmung (2d) ausgebildet ist.

8. Kabelumlenkbogen nach einem der vorhergehenden Ansprüche, **dadurch gekennzeichnet, dass** die Verstellvorrichtung (4) eine in der Seitenwand (2a,2b) verlaufende Ausnehmung (4a) umfasst, und dass die Verstellvorrichtung (4) ein Befestigungsmittel (4b) umfasst, um die Drehachse (3a) der Rolle (3) entlang der Ausnehmung (4a) mit der Seitenwand (2a,2b) zu verbinden.

9. Kabelumlenkbogen nach Anspruch 8, **dadurch gekennzeichnet, dass** die Ausnehmung (4a) E-förmig oder U-förmig ausgestaltet ist.

10. Kabelumlenkbogen nach einem der vorhergehenden Ansprüche, **dadurch gekennzeichnet, dass** dieser ein - Verstärkungsteil (1b) mit einer geradlinig oder einer geknickt verlaufenden Auflageseite (1a) umfasst, in welche die beiden Seitenwände (2a, 2b) münden.

11. Kabelumlenkbogen nach Anspruch 10, **dadurch gekennzeichnet, dass** das - Verstärkungsteil (1b) eine Mehrzahl von ebenfalls durch die Seitenwände 2a und 2b durchgängigen Bohrungen (2f) aufweist.
